# FASCICULE DE BREVET EUROPEEN

(11) **EP 1 861 889 B1**
(45) Date de publication et mention de la délivrance du brevet: **13.02.2019**
(21) Numéro de dépôt: 06726138.8
(22) Date de dépôt: 23.03.2006
(51) Int. Cl.: H01M 2/10, H01M 10/04, H01M 10/12, H01M 2/34

(54) **DISPOSITIF D'ALIMENTATION ELECTRIQUE POUR VEHICULE AUTOMOBILE**
VORRICHTUNG ZUR STROMVERSORGUNG EINES KRAFTFAHRZEUGES
DEVICE FOR SUPPLYING ELECTRIC POWER TO A MOTOR VEHICLE

(30) Priorité: 25.03.2005 FR 0502974
(43) Date de publication de la demande: 05.12.2007
(73) Titulaire: VALEO EQUIPEMENTS ELECTRIQUES MOTEUR, 94017 Créteil Cedex (FR)
(72) Inventeur: PICOD, Christophe, 91190 Gif sur Yvette (FR); TASPINAR, Ertugrul, 01400 Chatillon-Sur-Chalaronne (FR); ABADIA, Roger, 93360 Neuilly-Plaisance (FR); TREGUER, Matthieu, 94700 Maisons Alfort (FR); DOFFIN, Hugues, 94000 Créteil (FR)
(74) Mandataire: Gamonal, Didier
(86) Numéro de dépôt international: PCT/FR2006/000645
(87) Numéro de publication internationale: WO 2006/100391

(56) Documents cités:
- US-A- 5 866 274
- US-B1- 6 225 006
- US-B1- 6 240 637

## Description

L'invention se rapporte à un dispositif d'alimentation électrique pour véhicule automobile regroupant plusieurs unités de stockage d'énergie électrique; elle concerne plus particulièrement la structure des moyens de connexion associés à ces unités de stockage, dans le but d'alimenter plusieurs réseaux de distribution d'électricité distincts.

### ETAT DE LA TECHNIQUE

Dans les véhicules automobiles modernes, les besoins en énergie électrique ne cessent d'augmenter. Les équipements fonctionnant à l'électricité sont de plus en plus nombreux et la puissance électrique nécessaire est de plus en plus importante (plusieurs kilowatts). Il est aussi souhaitable de pouvoir disposer de plusieurs tensions d'alimentation, par exemple 12 V et 24 V (voire plus) pour alimenter spécifiquement tel ou tel équipement. Par exemple, si l'éclairage et les petits moteurs électriques équipant le véhicule peuvent être alimentés sous une tension de 12 V, comme par le passé, d'autres équipements (comme par exemple un alterno-démarreur) auraient avantage à bénéficier d'une tension d'alimentation plus élevée. La coexistence de deux réseaux de distribution d'électricité, ou plus, nécessite de concevoir un câblage ou toute erreur de branchement (à l'occasion d'une opération de maintenance, notamment) soit impossible. Des systèmes d'alimentation à plusieurs voltages sont décrits dans les documents US5866274 et US6225006.

### DEFINITION DE L'INVENTION

L'invention propose de regrouper des moyens de connexion spécifiques et sécurisés autour d'un ensemble d'unités de stockage d'énergie électrique capable de répondre aux besoins du véhicule.

Plus précisément, l'invention concerne un dispositif d'alimentation électrique pour véhicule automobile ayant toutes les caractéristiques mentionées dans la revendication 1, caractérisé en ce qu'il comporte au moins deux unités de stockage d'énergie électrique et un boîtier de connexion coiffant au moins partiellement au moins une telle unité de stockage et renfermant un circuit d'éléments de connexion établissant des raccordements électriques entre, d'une part, les bornes des éléments de stockage et d'autre part, au moins deux réseaux de distribution distincts dont l'un se raccorde par deux bornes accessibles montées sur le boîtier lui-même, le boîtier comportant des cosses de raccordement qui comportent chacune deux bras rigides (26,28) articulé; entre eux.

Ainsi, se trouve défini un nouvel ensemble fonctionnel compact et rationnel, capable de délivrer des tensions spécifiques différentes à plusieurs réseaux alimentant des systèmes différents. Il est à noter que l'un des réseaux (typiquement celui qui délivre le courant sous une tension de 12 V) conserve son raccordement traditionnel tandis que d'autres (de préférence tous les autres) sont protégés, non directement accessibles par un non spécialise et raccordés au boîtier de connexion par des prises spécifiques, "détrompées".

Comme mentionné précédemment, le boîtier de connexion coiffe au moins partiellement au moins une telle unité de stockage d'énergie électrique. Il peut constituer une sorte de couvercle protecteur recouvrant l'une ou l'ensemble de ces unités. Ces dernières peuvent être installées dans un bac et dans ce cas, le boîtier de connexion peut former une sorte de couvercle dudit bac. Les unités de stockage d'énergie électrique peuvent être de différentes sortes. Par exemple, on peut prévoir au moins un accumulateur électrochimique et une autre unité d'un genre différent comme par exemple un "super condensateur". Selon un autre mode de réalisation, on prévoira au moins deux accumulateurs électrochimiques identiques sont susceptibles d'être montés en série ou en parallèle. A cet effet, le boîtier de connexion peut renfermer un commutateur commandé, du type électronique ou électromécanique permettant de connecter les deux accumulateurs en série ou en parallèle. En variante le commutateur est remplacé par un circuit à comprenant au moins deux interrupteurs ou un circuit comprenant un commutateur et un interrupteur. Par ce moyen simple, on peut donc disposer d'une tension élevée, par exemple de 24 V, au moment d'une phase de démarrage et revenir à une tension habituelle plus basse (12 V) lorsque le moteur thermique fonctionne.

Comme indiqué ci-dessus, au moins une unité de stockage d'énergie électrique précitée peut être un composant dit super condensateur, c'est-à-dire en fait une capacité de très grande valeur. Un tel composant peut être utilisé notamment en liaison avec un système de récupération d'énergie ou pour fournir une pointe d'énergie électrique lorsque cela est nécessaire, par exemple au démarrage.

Avantageusement, le boîtier de connexion peut aussi renfermer un convertisseur continu-continu.

Avantageusement, le boîtier de connexion comporte des cosses de raccordement aux bornes desdites unités de stockage. Une telle cosse comporte deux bras rigides articulés entre eux, permettant une adaptation à des unités de stockage présentant des bornes d'écartement quelconque. Ces cosses de raccordement rigides et néanmoins adaptables peuvent constituer les moyens de montage mécanique dudit boîtier au-dessus des unités de stockage d'énergie électrique.

On notera qu'il est avantageux de disposer le boîtier de connexion au-dessus des unités de stockage regroupées côte à côte. Il joue ainsi le rôle supplémentaire de couvercle assurant une certaine protection thermique et protégeant aussi des fuites de produits dangereux ou évitant l'introduction de certains liquides. Toutes les bornes des unités de stockage peuvent être recouvertes ou au moins rendues inaccessibles par le boîtier de connexion formant couvercle, ce qui empêche un intervenant peu expérimenté d'avoir accès à d'autres tensions que la basse tension traditionnelle (12 V).

### BREVE DESCRIPTION DES DESSINS

L'invention sera mieux comprise et d'autres avantages de celle-ci apparaîtront plus clairement à la lumière de la description qui va suivre d'un dispositif d'alimentation électrique conforme à son principe, donnée uniquement à titre d'exemple et faite en référence aux dessins annexés dans lesquels :
- la figure 1 est une vue de dessus du dispositif d'alimentation électrique comportant ici deux accumulateurs électrochimiques placés côte à côte ;
- la figure 2 est une vue en élévation du même dispositif ;
- la figure 3 est une vue de détail en perspective illustrant un raccordement électrique à la prise de raccordement spécifique du mode de réalisation des figures 1 et 2 ;
- les figures 4 à 7 illustrent les étapes de fabrication du boîtier de connexion représenté sur les figures 1 et 2,
- la figure 8 illustre un autre mode de réalisation où le boîtier de connexion forme le couvercle d'un bac abritant une pluralité d'unités dites "super condensateurs" ;
- la figure 9 est une vue schématique d'un circuit du dispositif d'alimentation électrique pour un exemple de réalisation avec un interrupteur et un commutateur.

### DESCRIPTION DETAILLEE

Le dispositif d'alimentation électrique 11 représenté comporte deux unités de stockage d'énergie électrique 12a, 12b, qui sont placées côte à côte, et un boîtier de connexion 14 coiffant au moins partiellement ces deux unités de stockage. Dans l'exemple décrit, les deux unités de stockage sont deux accumulateurs électrochimiques ou batterie électrochimiques d'une tension nominale de 12 V chacun. En variante, l'une des unités de stockage peut être un tel accumulateur électrochimique et l'autre peut être un "super condensateur", c'est à dire une capacité de grande valeur (Ultra capacité). Un plus grand nombre d'unités de stockage est envisageable.

Le dispositif d'alimentation électrique 11 est destiné par exemple à faire partie d'un agencement pour véhicule automobile comportant une machine électrique tournante polyphasée et réversible, telle qu'un alterno-démarreur, et au moins deux unités de stockage d'énergie électrique 12a, 12b tel que décrit par exemple dans les documents WO 03/088471 et WO 02/080334 auxquels on se reportera pour plus de précisions.

Ce type d'agencement permet de récupérer de l'énergie lors du freinage et comporte deux réseaux de distribution, au moins un commutateur ou un circuit à deux interrupteurs et un convertisseur continu-continu, dit convertisseur DC/DC, permettant de convertir des tensions et de fonctionner à deux tensions différentes.

Pour mémoire on rappellera qu'un alterno-démarreur est un alternateur réversible permettant, d'une part, de transformer de l'énergie mécanique en énergie électrique lorsqu'il fonctionne en mode générateur électrique pour notamment recharger une batterie et /ou alimenter les consommateurs d'au moins un réseau de bord du véhicule automobile et d'autre part, de transformer de l'énergie électrique en énergie mécanique lorsqu'il fonctionne en mode moteur électrique, dit mode démarreur, pour notamment démarrer le moteur à combustion interne ou moteur thermique du véhicule automobile et, dans un mode de réalisation, éviter que le moteur thermique cale.

On notera qu'en mode démarreur (fonctionnement en mode moteur électrique) l'agencement permet d'alimenter l'alterno-démarreur avec une tension supérieure à celle en mode générateur. Cet alterno-démarreur comporte des moyens de redressement de courant appelés onduleur comportant par exemple des transistors du type MOSFET pilotés par une unité électronique de commande et de contrôle comme décrit par exemple dans les documents FR A 2 745 444 et FR A 2 745 445.

Cette unité électronique de commande et de contrôle reçoit des signaux provenant de capteurs de la position angulaire du rotor de la machine et comporte également des pilotes, dits drivers, qui sont des éléments de puissance et qui commandent les transistors du type MOSFET. Ces pilotes, dans un mode de réalisation, appartiennent à un étage de puissance comprenant également les transistors du type MOSFET de l'onduleur constituant un convertisseur électrique réversible de courant alternatif -continu dit « AC/DC » en mode générateur électrique. En mode moteur électrique les transistors MOSFET de l'onduleur sont pilotés en tout ou rien pour commander en pleine onde les enroulements du stator de la machine ou en variante par une commande à largeurs d'impulsions variables.

Les éléments de contrôle appartiennent à un étage de plus faible puissance.

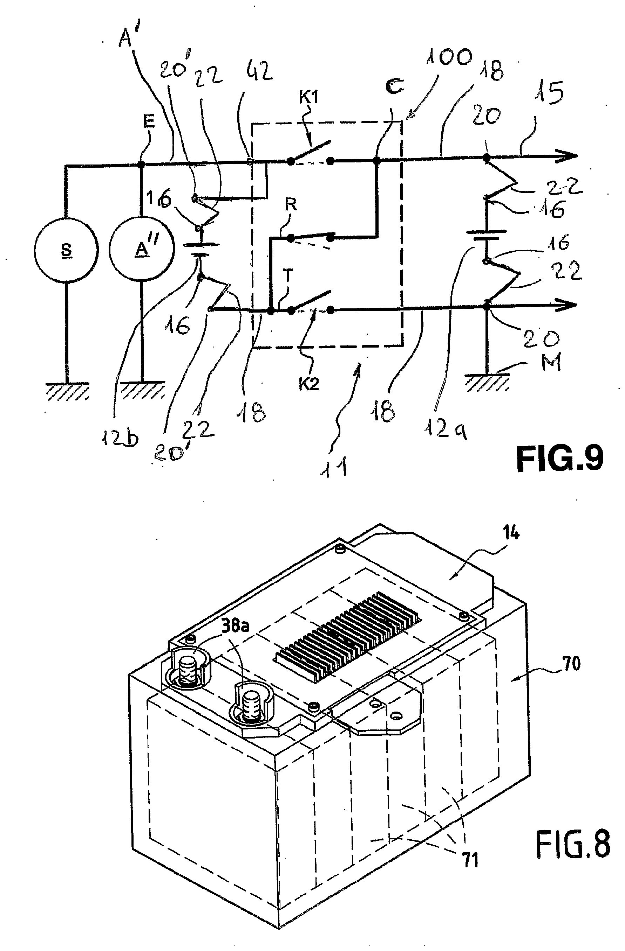

A la lumière des deux documents WO 03/088471 et WO 02/080334 précités, on voit que les deux sources d'énergie peuvent consister en une batterie et une capacité de grande valeur ou Ultra capacité. En variante comme décrit dans la figure 9 du document WO 02/080334 il peut s'agir de deux batteries avec présence de convertisseurs DC/DC et d'interrupteurs.

Le dispositif d'alimentation électrique 11 décrit ci-dessous peut faire partie, dans un autre mode de réalisation, d'un agencement pour véhicule automobile comportant deux batteries et un alterno-démarreur ou un alternateur et un démarreur, le démarreur ou l'alterno-démarreur étant en mode démarreur adapté, par exemple à être alimenté en 24V à l'aide de deux batteries pour démarrer le moteur thermique du véhicule automobile , tandis que l'alternateur ou l'alterno-démarreur en mode générateur est alimenté en 12V.

Cela est réalisé à l'aide d'au moins un commutateur ou de deux interrupteurs permettant de connecter les deux batteries en série au démarrage ou en parallèle avec cumul des réserves d'énergie des deux batteries.

Le commutateur ou les interrupteurs peuvent être pilotés par l'unité de commande et de contrôle de l'alterno-démarreur.

Les deux unités de stockage d'énergie électrique 12a,12b sont disposées de telle sorte que leurs bornes de raccordement 16 soient éloignées le plus possible les unes des autres, comme représenté. Le boîtier de connexion 14 est en matière électriquement isolante, ici en matière plastique isolante. Ce boîtier 14 suivant une caractéristique recouvre au moins la partie centrale des unités de stockage 12a, 12b et notamment, rend lesdites bornes de raccordement 16 inaccessibles ou en tous cas difficilement accessibles.

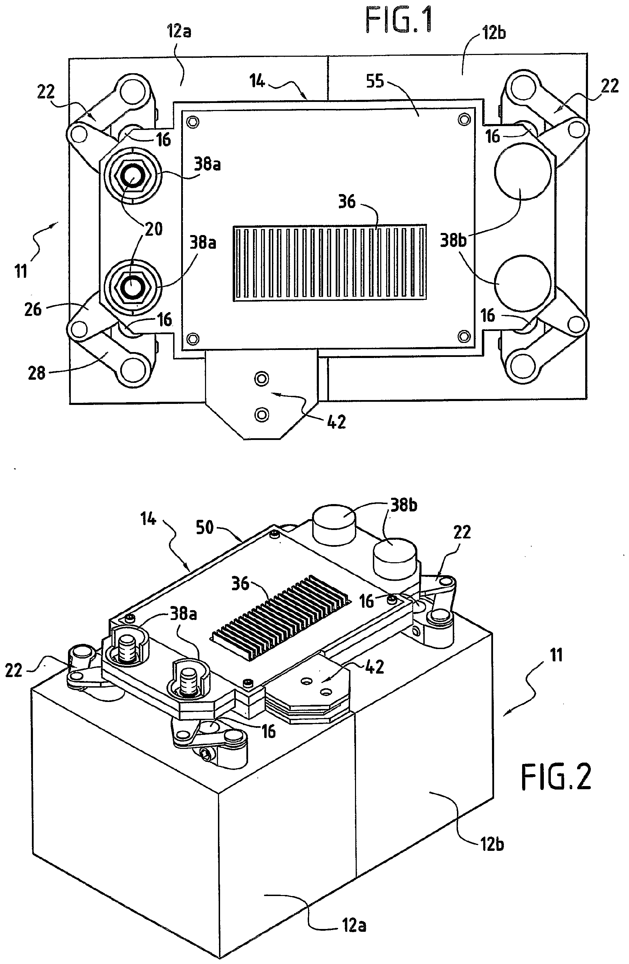

Le boîtier de connexion 14 renferme un circuit comportant des éléments de connexion 18, ici métalliques, plats permettant d'établir les raccordements électriques entre, d'une part, les bornes 16 des éléments de stockage et, d'autre part, deux réseaux de distribution distincts. L'un des réseaux se raccorde aux deux bornes accessibles 20 montées sur le boîtier lui-même. Ces bornes 20 sont destinées, comme sur une batterie classique, à être reliées à la masse et à une ligne positive reliée au réseau de bord du véhicule. L'autre réseau se raccorde à deux bornes non accessibles montées sur le boîtier de manière décrite ci-après. Le boîtier de connexion 14 comporte des cosses de raccordement 22 pour son branchement aux bornes 16 desdites unités de stockage. On distingue sur la figure 1, quatre cosses de raccordement 22 de ce genre métalliques. Chacune comporte deux bras rigides 26, 28 articulés entre eux, permettant une adaptation de longueur entre une borne prévue sur le boîtier de connexion et la borne 16 prévue sur l'unité de stockage correspondante. Comme visible dans les figures 1 et 2, le bras 28 est monté à articulation à l'une de ses extrémités sur un prolongement d'une première cosse (non référencée) électriquement conductrice montée sur la borne 16.

Ce bras 28 est monté à articulation à l'autre de ses extrémités sur l'extrémité du bras 26 opposée à l'extrémité de ce bras 26 , qui porte à la borne 20 ou la borne non accessible (référencée en 20' à la figure 9) montée sur le boîtier de connexion 14.

Ces bornes 20, 20' consistent par exemple en un boulon dont la tête prend appui sur le bras 26 troué pour le passage de la partie filetée du boulon.

Le montage fait donc appel à trois éléments à savoir la première cosse et les deux bras 26, 28 articulés entre eux, qui forment un pantographe entre une borne d'une unité de stockage d'énergie et une borne du boîtier 14. Ce montage permet un décalage verticale entre les bornes 16 et les bornes accessibles et non accessibles du boîtier 14 ainsi que des décalages longitudinaux et en largeur. Ainsi, le même boîtier de connexion peut être utilisé en relation avec des unités de stockage de dimensions quelconques différentes De même grâce aux cosses 22, dans un autre mode de réalisation, le boîtier 14 coiffe entièrement une unité de stockage 12a, 12b, voir les deux unités de stockage.

Dans l'exemple, les éléments de connexion 18 métalliques, insérés dans le boîtier de connexion, établissent les liaisons électriques entre les cosses de raccordement 22 et un commutateur commandé 30 (de type électromécanique ou électronique) intégré dans la structure du boîtier de connexion 14. Un tel commutateur permet de connecter les deux unités de stockage d'énergie électrique en série ou en parallèle selon les besoins. En variante le commutateur est remplacé par deux interrupteurs commandés.

Le boîtier de connexion 14 est relié à deux réseaux de distribution distincts dont l'un se raccorde par deux bornes 20 accessibles, prévues sur le boîtier lui-même. Le boîtier comporte à cet effet des bossages 38a, 38b en matière plastique entourant les bornes de connexion des cosses 22, côté boîtier, et qui sont soit ouverts soit fermés Lorsque les bossages sont ouverts (38a), on peut relier un réseau de distribution (typiquement le réseau 12 V) directement à ces bornes. En revanche, suivant une caractéristique, aucune autre connexion n'est possible avec les autres bornes (20'-figure9) de l'autre réseau puisqu'elles sont protégées par des bossages fermés 38b. Ici l'autre réseau, qui ne doit pas être accessible à un intervenant non spécialiste, est connecté à une prise de raccordement spécifique 42, détrompée et protégée. Ce peut être le cas, par exemple pour l'alimentation d'un alterno-démarreur ou d'un alternateur. La prise 42 est connectée au commutateur par les éléments de connexion 18.

Outre les interrupteurs commandés ou le commutateur commandé 30, qui est connecté aux différents éléments de connexion plats 18 inclus dans le boîtier, le dispositif peut comporter au moins un convertisseur continu-continu 34 associé aux unités de stockage comme dans les documents WO 03/088471 et WO 02/080334. De tels composants électroniques et/ou électromécaniques sont de préférence montés de façon à être en contact thermique avec un radiateur de dissipation thermique 36 émergeant à la surface supérieure du boîtier.

Le radiateur 36 est ici métallique et comporte des ailettes comme visible dans les figures 1 à 3, 6 et 7. Ce radiateur est par exemple en aluminium.

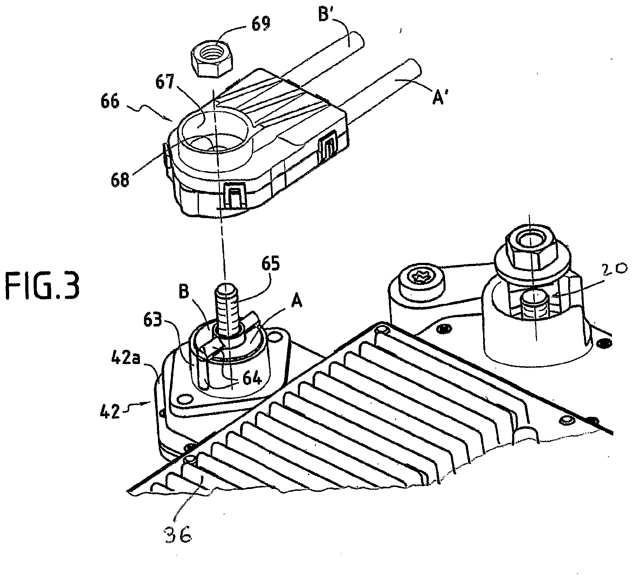

La figure 3 montre un exemple de connexion électrique venant se raccorder à la prise de raccordement 42. Celle-ci forme une embase 42a sur laquelle est monté un socle 63 en matière plastique isolante, renfermant deux bornes métalliques A et B semi-annulaires séparées par une barrette saillante 64, isolante conformée pour constituer un détrompeur. Une vis 65 isolée des deux bornes A et B fait saillie au centre du socle. Par ailleurs, un embout 66 auquel sont raccordés deux câbles électriques A', B' venant se brancher aux bornes A, B, respectivement comporte un perçage 68 débouchant au fond d'un logement 67 propre à recevoir un écrou 69. L'embout 66 comporte aussi des empreintes (non visibles) correspondant à la barrette 64.

Au montage, l'embout est engagé sur le socle de façon que la vis 65 fasse saillie au centre du logement 67.

Le serrage de l'écrou assure les deux connexions électriques. Cet agencement est semblable à celui décrit dans WO 02/060038 appartenant à la demanderesse.

La borne A correspond au niveau bas de tension (la masse). La borne B correspond à une tension positive dont la valeur V dépend du mode de fonctionnement.

Typiquement V = 12 volts en mode générateur et V = 12 + X volts en mode démarreur. Le boîtier de connexion permet le changement de tension en modifiant la combinaison des unités de stockage.

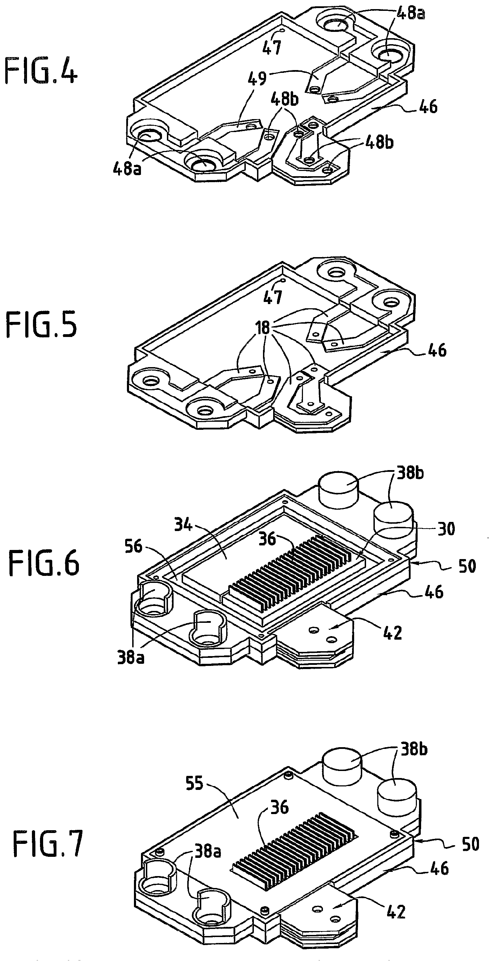

Les figures 4 à 7 illustrent les différentes étapes de fabrication dudit boîtier de connexion 14. Une semelle inférieure 46 en matière plastique isolante obtenue par moulage. Elle comporte des trous de montage 47, quatre trous 48a pour le passage respectivement des bornes accessibles 20 et des bornes non accessibles (20'-figure 9) recouvertes par les bossages 38b, des trous 48b pour les raccordements électriques 18 et des empreintes 49 reproduisant les formes des éléments de connexion 18 pour logement de ces éléments 18. Cette partie est visible sur la figure 4. Comme représenté sur la figure 5, les éléments de connexion métallique 18 sont placés dans les empreintes 49 prévues à cet effet. Une partie intermédiaire 50, en matière plastique, est surmoulée et vient recouvrir les éléments de connexion 18 et les bornes de raccordement non accessibles. Les éléments 18 sont ainsi pris en sandwich entre la semelle 46 et la partie intermédiaire 50. En variante cela est réalisé en une seule pièce par surmoulage. On aboutit à la configuration de la figure 6 où l'on voit l'apparition des bossages ouverts (38a) et des bossages fermés (38b) autour des emplacements des bornes de raccordement dudit boîtier de connexion. En outre, un espace creux 56 est ménagé pour le logement des composants électroniques ou électromécaniques tels que le commutateur 30 et/ou le convertisseur 34. Certains au moins de ces composants sont refroidis par le radiateur 36 de dissipation thermique qui émerge d'un couvercle 55 recouvrant toute la partie centrale du boîtier. Ce couvercle peut être surmoulé ou assemblé par vis.

A la lumière de ce qui précède il résulte que le boîtier 14 peut comporter au moins l'étage de puissance d'un alterno-démarreur voir l'étage de commande de l'alterno-démarreur, des câbles reliant les sorties des phases de l'alterno-démarreur au boîtier 14 contenant l'étage de puissance et l'étage de commande de l'alterno-démarreur par exemple du type triphasé. Dans ce cas le socle 63 renferme trois bornes métalliques séparées les unes des autres par l'intermédiaire de trois barrettes saillantes 64. Le radiateur 36 permet de refroidir ces étages.

L'étage de puissance peut être un circuit du type SMI comportant une embase métallique, par exemple en aluminium, plaquée sur la face inférieure du radiateur 36, c'est-à-dire sur la face du radiateur opposée à la face de celui-ci portant les ailettes. Ce plaquage est dans un mode de réalisation effectué en vissant l'embase sur le radiateur ou en variante en collant l'embase sur le radiateur.

Un réseau de conducteurs électriques, dit lead frame, est collé sur la face inférieure de l'embase par l'intermédiaire d'une colle électriquement isolante.

Le réseau de conducteurs est doté de plages recevant un ou plusieurs composants électroniques, notamment les transistors du type MOSFET.

Ces conducteurs comportent localement des entretoises électriquement conductrices. Ces entretoises, par exemple de forme cylindrique creuse, prennent appui chacune sur un élément de connexion 18. Les éléments 18 sont troués au niveau des trous 48b réalisés dans la semelle 46 et les entretoises sont intérieurement taraudées.

Des vis sont prévus pour lier électriquement et mécaniquement les éléments 18 et les entretoises. La tête des vis est logée dans les trous 48b et prend appui sur la face inférieure de l'élément 18 concerné. La partie filetée de chaque vis traverse le trou de l'élément 18 concerné pour se visser dans l'entretoise associée. En variante on peut souder les entretoises et les éléments 18. Les trous 47 servent au vissage du couvercle 55 avec la semelle 46 et la partie intermédiaire 50. Des vis peuvent servir également à l'assemblage du radiateur 36 avec la semelle et la partie intermédiaire.

Le circuit de commande de l'alterno-démarreur est dans un mode de réalisation un circuit du type PCB placé à côté du circuit de puissance du type SMI. Ce circuit est fixé par exemple par visage sur la face inférieure du radiateur 36.

La figure 8 illustre une variante où le boîtier de connexion 14 recouvre au moins une unité de stockage et forme une sorte de couvercle assurant une certaine protection.

Dans cet exemple, un réceptacle 70 en matière plastique isolante abrite plusieurs unités de stockage telles que des "super-condensateurs" 71. Les unités de stockage sont connectées entre elles en série-parallèle de façon à présenter S unités en série et P unités en parallèle pour obtenir la tension et la capacitance voulues. Le boîtier de connexion 14 est solidaire du réceptacle 70 et forme une sorte de couvercle de protection, pour des raisons de sécurité, s'agissant de "super-condensateurs".

Les bornes de sortie sont les deux bornes 38a comme précédemment. Elles délivrent une tension de 12 volts. D'une façon générale, si le boîtier de connexion ne recouvre qu'une unité de stockage ou certaines d'entre elles, ce sera en priorité un ou des "super-condensateurs".

Ainsi qu'il ressort à l'évidence des dessins et de la description le dispositif d'alimentation électrique pour un véhicule automobile selon l'invention est compact et forme un ensemble unitaire manipulable et transportable avec présence de deux bornes accessibles 20 comme pour une batterie ou accumulateur électrochimique normal avec diminution de la longueur des liaisons électriques et simplification de celles-ci.

Cet agencement compact permet ainsi de réduire les inductances de liaison, notamment entre l'onduleur et le convertisseur continu-continu, ou encore entre l'onduleur et l'Ultra capacité, qui produisent des ondulations de tension et de résonance entre les différents composants et des décalages de masse pour les signaux à communiquer entre les différents équipements.

Le fait de réduire les inductances de liaison, permet également de réduire le phénomène d'avalanche au niveau de l'onduleur, phénomène bien connu de l'homme du métier qui peut produire des problèmes thermiques.

En outre, cet agencement compact évite d'avoir les inconvénients d'une conception éclatée de ce type de dispositifs d'alimentation électrique, conception éclatée qui implique une multiplication des boîtiers électroniques dans le véhicule, et par conséquent une multiplication des impératifs d'étanchéité et de refroidissement pour chaque boîtier, et en de nombreux problèmes de câblage dans le véhicule et de tenue des connexions.

Ainsi, on améliore l'intégration et l'encombrement des unités de stockages, des convertisseurs et du commutateur ou des interrupteurs dans le véhicule, ainsi que leur comportement thermique et électrique durant le fonctionnement du dispositif.

Bien entendu la présente invention n'est pas limitée aux exemples de réalisations décrits car la présente invention permet de nombreuses applications.

Ainsi en variante le boîtier peut comporter des capteurs de courant, de tension ou de température pour les deux sources de stockage d'énergie, notamment pour détecter des chutes de tension ou d'une manière générale surveiller l'état de ces sources d'énergie.

Un actionneur pour déconnecter les sources de stockage d'énergie en cas de collision peut être intégrés dans le boîtier.

Ce boîtier peut comporter au moins une borne supplémentaire reliée à des composants électroniques pour dialoguer et communiquer par exemple avec le contrôle moteur du véhicule automobile. Ainsi le boîtier peut comporter le régulateur de tension de la machine électrique tournante, telle qu'un alterno-démarreur.

Les accumulateurs électrochimiques peuvent être des batteries de tout type par exemple aux plomb, NiMH (nickel metal hybride) ou au lithium.

Les circuits pour connecter en série et en parallèle les sources de stockage d'énergie peuvent avoir des formes variées puisque tout est regroupé au niveau du boîtier.

Ainsi ce circuit peut être du type de celui des figures 4 et 5 du document EPA 1360090. Ce circuit peut comporter également un commutateur commandé et un interrupteur commandé.

En variante, comme visible à la figure 9 le dispositif selon l'invention peut faire partie d'un circuit comprenant une unité électromécanique comportant un alternateur A" et un démarreur S montés en parallèle en étant connectés par une première borne à la masse et par une seconde borne E. En variante l'unité électromécanique comporte un alterno-démarreur remplaçant l'alternateur A" et le démarreur S. De manière connue l'alternateur A" comporte un pont redresser et un régulateur de tension, un câble A' reliant la borne 42 à la borne E. La borne 42 est alors dédiée à l'alimentation d'un démarreur et d'un alternateur ou à l'alimentation d'un alterno-démarreur.

Le dispositif comprend un interrupteur K1 et un commutateur K2.

Le commutateur K2 et l'interrupteur K1 forment une unité de commutation 100 intégrée dans le boîtier 14 de la figure 2.

Dans cette figure 9 le commutateur K2 est dans la position R, tandis que l'interrupteur K1 est ouvert.

Dans cette configuration les deux unités de stockage d'énergie 12a, 12b sont en série.

Dans la deuxième position (K1 et K2 représentés en pointilles) le commutateur K2 est dans la position T et l'interrupteur K1 est fermé en sorte que les deux sources 12a,12b sont montées en parallèle ; le point C étant au potentiel de la borne E. L'unité de commutation 100 comporte dans un mode de réalisation des composants électroniques pilotés par commande filaire. La référence 15 représente la ligne positive d'alimentation du réseau de bord du véhicule et M la masse.

## Revendications

1. Dispositif d'alimentation électrique pour véhicule automobile, **caractérisé en ce qu'**il comporte au moins deux unités de stockage d'énergie électrique (12a, 12b) et un boîtier de connexion (14) coiffant au moins partiellement au moins une telle unité de stockage et renfermant un circuit d'éléments de connexion (18) établissant des raccordements électriques entre, d'une part, les bornes des éléments de stockage et d'autre part, au moins deux réseaux de distribution distincts dont l'un se raccorde par deux bornes accessibles montées sur le boîtier lui-même,
**caractérisé en ce que** ledit boîtier de connexion (14) comporte des cosses de raccordement (22) aux bornes desdites unités de stockage, **en ce que** de telles cosses comportent, chacune, deux bras rigides (26, 28) articulés entre eux permettant une adaptation à des unités de stockage présentant des bornes d'écartement quelconque.

2. Dispositif selon la revendication 1, **caractérisé en ce que** lesdites cosse de raccordement (22) comportant lesdits bras rigides constituent les moyens de montage mécanique dudit boîtier, celui-ci étant porté par lesdites unités de stockage d'énergie électrique (12a, 12b).

3. Dispositif selon l'une des revendications précédentes, **caractérisé en ce que** ledit boîtier de connexion (14) est en matière plastique isolante et **en ce que** des éléments de connexion (18) précités sont des conducteurs plats insérés dans la matière plastique.

4. Dispositif selon l'une des revendications précédentes, **caractérisé en ce que** ledit boîtier de connexion renferme un commutateur commandé (30) apte à connecter au moins deux unités de stockage précitées, en série ou en parallèle.

5. Dispositif selon l'une des revendications précédentes, **caractérisé en ce que** ledit boîtier de connexion renferme un convertisseur continu-continu (34).

6. Dispositif selon l'une quelconque des revendication précédentes, **caractérisé en ce que** le boîtier de connexion intègre au moins l'étage de puissance d'un alterno-démarreur.

7. Dispositif selon l'une des revendications 4 à 6, **caractérisé en ce qu'**il comporte un radiateur de dissipation thermique (36), en contact thermique avec des composants inclus dans ledit boîtier.

8. Dispositif selon l'une des revendications précédentes, **caractérisé en ce que** ledit boîtier comporte une prise de raccordement spécifique (42) pour la connexion protégée d'un autre réseau de distribution de courant.

9. Dispositif selon la revendication 8, **caractérisé en ce que** ledit autre réseau de distribution est spécifiquement dédié à l'alimentation d'un démarreur et d'un alternateur ou d'un alterno-démarreur.

10. Dispositif selon l'une des revendications précédentes, **caractérisé en ce qu'**au moins une unité de stockage d'énergie électrique est un accumulateur électrochimique.

11. Dispositif selon l'une des revendications précédentes, **caractérisé en ce qu'**au moins une unité de stockage d'énergie électrique est un composant dit super-condensateur.

12. Dispositif selon l'une des revendications précédentes, **caractérisé en ce que** de telles unités de stockage sont installées dans un réceptacle (70) et **en ce que** ledit boîtier de connexion (14) est solidaire de ce réceptacle.

## Patentansprüche

1. Vorrichtung zur Stromversorgung für ein Kraftfahrzeug, **dadurch gekennzeichnet, dass** sie mindestens zwei Einheiten zur Speicherung elektrischer Energie (12a, 12b) und ein Verbindungsgehäuse (14), das mindestens eine derartige Einheit zur Speicherung zumindest teilweise abdeckt und eine Schaltung aus Verbindungselementen (18) enthält, die elektrische Verbindungen zwischen einerseits den Anschlüssen der Speicherelemente und andererseits mindestens zwei separaten Verteilungsnetzen, wovon eins über zwei zugängliche Anschlüsse angeschlossen wird, die an dem Gehäuse selbst angebracht sind, herstellen, umfasst **dadurch gekennzeichnet, dass** das Verbindungsgehäuse (14) Klemmen zur Verbindung (22) mit den Anschlüssen der Einheiten zur Speicherung aufweist, dadurch, dass derartige Klemmen jeweils zwei feste Arme (26, 28) aufweisen, die gelenkig miteinander verbunden sind, die eine Anpassung an Einheiten zur Speicherung erlauben, die beliebige Spreizanschlüsse aufweisen.

2. Vorrichtung nach Anspruch 1, **dadurch gekennzeichnet, dass** die Klemmen zur Verbindung (22), die die festen Arme aufweisen, die Mittel zur mechanischen Montage des Gehäuses bilden, wobei dieses von den Einheiten zur Speicherung elektrischer Energie (12a, 12b) getragen wird.

3. Vorrichtung nach einem der vorhergehenden Ansprüche, **dadurch gekennzeichnet, dass** das Verbindungsgehäuse (14) aus einem isolierenden Kunststoff ist, und dadurch, dass die vorgenannten Verbindungselemente (18) flache Leiter sind, die in den Kunststoff eingeführt sind.

4. Vorrichtung nach einem der vorhergehenden Ansprüche, **dadurch gekennzeichnet, dass** das Verbindungsgehäuse einen gesteuerten Schalter (30) enthält, der geeignet ist, mindestens zwei vorgenannte Einheiten zur Speicherung in Reihe oder parallel zu schalten.

5. Vorrichtung nach einem der vorhergehenden Ansprüche, **dadurch gekennzeichnet, dass** das Verbindungsgehäuse einen Gleichstrom/Gleichstrom-Wandler (34) enthält.

6. Vorrichtung nach einem der vorhergehenden Ansprüche, **dadurch gekennzeichnet, dass** das Verbindungsgehäuse zumindest die Leistungsstufe eines Starter-Generators aufnimmt.

7. Vorrichtung nach einem der Ansprüche 4 bis 6, **dadurch gekennzeichnet, dass** sie einen Kühlkörper zur Wärmeableitung (36) aufweist, der mit den Komponenten, die in dem Gehäuse enthalten sind, in thermischem Kontakt steht.

8. Vorrichtung nach einem der vorhergehenden Ansprüche, **dadurch gekennzeichnet, dass** das Gehäuse eine spezifische Anschlussdose (42) für den geschützten Anschluss eines anderen Stromverteilungsnetzes aufweist.

9. Vorrichtung nach Anspruch 8, **dadurch gekennzeichnet, dass** das andere Stromverteilungsnetz eigens für die Stromversorgung eines Starters und eines Generators oder eines Starter-Generators bestimmt ist.

10. Vorrichtung nach einem der vorhergehenden Ansprüche, **dadurch gekennzeichnet, dass** mindestens eine Einheit zur Speicherung elektrischer Energie ein elektrochemischer Akkumulator ist.

11. Vorrichtung nach einem der vorhergehenden Ansprüche, **dadurch gekennzeichnet, dass** mindestens eine Einheit zur Speicherung elektrischer Energie eine Komponente ist, die als Superkondensator bezeichnet wird.

12. Vorrichtung nach einem der vorhergehenden Ansprüche, **dadurch gekennzeichnet, dass** derartige Einheiten zur Speicherung in einer Aufnahme (70) eingebaut sind, und dadurch, dass das Verbindungsgehäuse (14) mit dieser Aufnahme fest verbunden ist.

## Claims

1. Electric power supply device for a motor vehicle, **characterized in that** it comprises at least two electric power storage units (12a, 12b) and a connection box (14) at least partially covering at least one such storage unit and containing a circuit for connection elements (18) forming electrical connections between, on the one hand, the terminals of the storage elements and, on the other hand, at least two distinct distribution networks, one of which is connected by two accessible terminals mounted on the box itself,
**characterized in that** said connection box (14) comprises connection sockets (22) at the terminals of said storage units, **in that** such sockets each comprise two mutually articulated rigid arms (26, 28) allowing adaptation to storage units having terminals with any desired spacing.

2. Device according to Claim 1, **characterized in that** said connection sockets (22) comprising said rigid arms form the mechanical assembly means of said box, said box being borne by said electric power storage units (12a, 12b).

3. Device according to any of the preceding claims, **characterized in that** said connection box (14) is made of insulating plastic material and **in that** said connection elements (18) are flat conductors inserted into the plastic material.

4. Device according to any of the preceding claims, **characterized in that** said connection box contains a controlled switch (30) capable of connecting at least two of said storage units in series or in parallel.

5. Device according to any of the preceding claims, **characterized in that** said connection box contains a direct-direct converter (34).

6. Device according to any of the preceding claims, **characterized in that** the connection box integrates at least the power stage of an alterno-starter.

7. Device according to any of Claims 4 to 6, **characterized in that** it comprises a heat sink (36) in thermal contact with components included in said box.

8. Device according to any of the preceding claims, **characterized in that** said box comprises a specific connection socket (42) for the secure connection of another current distribution network.

9. Device according to Claim 8, **characterized in that** said other distribution network is specifically dedicated to powering a starter and an alternator or an alterno-starter.

10. Device according to any of the preceding claims, **characterized in that** at least one electric power storage unit is an electrochemical accumulator.

11. Device according to any of the preceding claims, **characterized in that** at least one electric power storage unit is a component called super-capacitor.

12. Device according to any of the preceding claims, **characterized in that** such storage units are installed in a receptacle (70) and **in that** said connection box (14) is rigidly connected to said receptacle.
